# EUROPÄISCHE PATENTANMELDUNG

(11) **EP 4 738 689 A1**
(43) Veröffentlichungstag der Anmeldung: **06.05.2026**
(21) Anmeldenummer: 24210734.0
(22) Anmeldetag: 05.11.2024
(51) Int. Cl.: H02P 6/16

(54) **LINEARISIEREN EINER WINKELPOSITION**

(71) Anmelder: Hilti Aktiengesellschaft, 9494 Schaan (LI)
(72) Erfinder: Hurka, Florian, 86459 Margertshausen (DE); Freischle, Justus, 86899 Landsberg (DE)
(74) Vertreter: Hilti Aktiengesellschaft Corporate Intellectual Property

(57) **Zusammenfassung**

Die vorliegende Erfindung betrifft ein Verfahren (M10) zum Betreiben einer mobilen Werkzeugmaschine (100), wobei die Werkzeugmaschine (100) eine Sensorschaltung (113) hat, welche zum abgestuften Erfassen einer Winkelposition (Wₐ) eines Rotors (104) eines Elektromotors (102) konfiguriert ist, enthaltend die Schritte: Erfassen (S11) einer abgestuften Winkelposition (Wₐ) des Rotors (104) mittels der Sensorschaltung (113); Bestimmen (S15) einer linearisierten Winkelposition (Wₗ) des Rotors (104) in Abhängigkeit der abgestuften Winkelposition (Wₐ) mittels einer Reihenschaltung enthaltend ein Schleifenfilter (119) und ein nachgeschaltetes Integratorglied (123); und Beaufschlagen (S18) zumindest einer Wicklung (W1, W2, W3) des Elektromotors (102) mit elektrischem Strom (I_{w}) in Abhängigkeit der linearisierten Winkelposition (Wₗ).

## Beschreibung

### GEBIET DER ERFINDUNG

Die vorliegende Erfindung betrifft ein Verfahren zum Betreiben einer mobilen Werkzeugmaschine, welche eine zum abgestuften Erfassen einer Winkelposition eines Rotors eines Elektromotors konfigurierte Sensorschaltung hat. Außerdem betreffen weitere Aspekte der vorliegenden Erfindung ein Computerprogrammprodukt, ein Steuergerät für eine mobile Werkzeugmaschine und schließlich eine mobile Werkzeugmaschine.

Eine solche mobile Werkzeugmaschine hat einen Elektromotor, der einen Rotor und einen Stator hat. Zum effizienten Betreiben der Werkzeugmaschine ist es vorteilhaft, Wicklungen des Elektromotors passend zu einer tatsächlichen/aktuellen Winkelposition des Rotors mit elektrischem Strom zu beaufschlagen. Eine beispielhafte Anwendung ist ein feldorientiertes Beaufschlagen eines bürstenlosen Gleichstrommotors. Es gestaltet sich jedoch schwierig, diese tatsächliche Winkelposition mit hinreichender Genauigkeit zu erfassen.

Die Winkelposition bezeichnet eine Ausrichtung des Rotors um dessen Längs- bzw. Rotationsachse. Man kann auch Rotationswinkelposition oder Rotationsposition sagen.

Wenn der Rotor rotiert, ändert sich die Winkelposition, also die tatsächliche Ausrichtung des Rotors um dessen Rotationsachse, kontinuierlich. Unter einer abgestuften Winkelposition kann man eine Winkelposition verstehen, deren Amplitudenbereich (von 0 bis 360° bzw. von 0 bis 2π) in eine endliche Anzahl von Stufen (kleinere Teilbereiche des gesamten Amplitudenbereichs) unterteilt ist. Beispielsweise kann mit drei zueinander um 120° versetzten Hallsensoren die tatsächliche Winkelposition in sechs Winkelpositionsstufen auflösen. Vereinfacht kann man sagen, dass eine kontinuierliche Größe in einen Bereich eingeteilt wird, der aus relativ wenigen bzw. relativ grob aufgelösten Bereichen ausgewählt ist.

Unter einem Linearisieren soll man vorzugsweise ein Annähern eines abgestuften Verlaufs an einen geraden oder gekrümmten Verlauf entsprechend einem Trend des abgestuften Verlaufs verstehen.

Um die abgestufte Winkelposition zu linearisieren, kann man eine lineare Extrapolation einsetzen. Man könnte beispielsweise von der letzten bekannten Winkelposition (bspw. Zeitpunkt eines Wechsels zwischen zwei Winkelpositionsstufen) und einer bekannten Winkelgeschwindigkeit ausgehend eine linearisierte Winkelposition berechnen. Für den Betrieb mobiler Werkzeugmaschinen sind jedoch häufige raschen Drehzahländerungen (Beschleunigungen / Verzögerungen / Stöße) typisch. Übliche Anwendungsbeispiele sind Drehschlagschrauber, Meißel, Schrauber und dergleichen. In diesen Fällen entstehen hohe Extrapolationsfehler, sodass eine lineare Extrapolation ungeeignet ist.

Es sind bisher Phasenregelschleifen bekannt. Diese dienen in der Nachrichtentechnik der Synchronisation mit getakteten Eingangssignalen. Eine beispielhafte Schaltung enthält in diesem Fall beispielsweise in dieser Reihenschaltung einen Phasendetektor, ein Schleifenfilter und einen Spannungs-gesteuerten Oszillator (fachsprachlich "Voltage Controlled Oscillator" oder VCO).

Für Servomotoren ist bekannt, eine Winkelposition mittels einer Phasenregelschleife in Abhängigkeit von rückinduzierten Spannungen (fachsprachlich "back electromotive force" bzw. BEMF) zu bestimmen. Aus der Veröffentlichung "JARZEBOWICZ L., CISEK M., OPALINSKI A., Angle Tracking Observer for Filtering Rotor Position Estimates in Sensorless Electric Drives, Elektronika ir Elektrotechnika, ISSN 1392-1215, Vol. 22, No. 5, 2016" ist ein Verfahren zum sensorlosen Schätzen einer Rotorposition bekannt. Hierbei wird ein zweistufiger Ansatz verwendet, um aus einem Verlauf eines elektromagnetischen Drehmoments zwischen Stator und Rotor (d.h. aus einem Verlauf der BEMF) eine Winkelposition des Rotors zu schätzen. In einer ersten Stufe wird aus dem Drehmomentverlauf eine Winkelposition geschätzt, welche stark verrauscht ist. In einer zweiten Stufe wird das Rauschen durch einen geschlossenen Regelkreis geglättet, welcher eine Reihenschaltung zweier Integrator-Glieder enthält und deren Ausgaben summiert; man kann also sagen, dass die Rotorposition mittels eines Integrator-Filters 2. Ordnung geschätzt wird. Ferner wird beschrieben, wie mittels eines Simulationsmodells Kennfeld-basiert geeignete Filterkoeffizienten ausgewählt werden können. Dieses Verfahren geht somit von einem kontinuierlich erfassten elektromotorischen Drehmomentverlauf bzw. der rückinduzierten Spannung aus, und ist daher nicht auf eine abgestufte Winkelposition entsprechend der gewünschten Bauart der Werkzeugmaschine anwendbar.

Die bekannten Verfahren zum Betreiben einer mobilen Werkzeugmaschine sind somit hinsichtlich der Genauigkeit beim Ermitteln einer Winkelposition mittels Sensoren sehr beschränkt.

Eine Aufgabe der vorliegenden Erfindung ist es daher, ein verbessertes Verfahren zum Betreiben einer mobilen Werkzeugmaschine bzw. eine verbesserte mobile Werkzeugmaschine bereitzustellen, wobei insbesondere eine Rotorwinkelposition mit hoher Genauigkeit bestimmt werden soll.

### OFFENBARUNG DER ERFINDUNG

Demgemäß wird ein Verfahren zum Betreiben einer mobilen Werkzeugmaschine vorgeschlagen. Die Werkzeugmaschine hat eine Sensorschaltung, welche zum abgestuften bzw. Stufen-weisen bzw. Intervall-weisen Erfassen einer Winkelposition eines Rotors eines Elektromotors konfiguriert ist. Das vorgeschlagene Verfahren enthält den Schritt, eine abgestufte Winkelposition des Rotors mittels der Sensorschaltung zu erfassen. Das vorgeschlagene Verfahren enthält den Schritt, eine linearisierten Winkelposition des Rotors in Abhängigkeit der abgestuften Winkelposition zu bestimmen, und zwar mittels einer Reihenschaltung enthaltend ein Schleifenfilter und ein dem Schleifenfilter nachgeschalteten Integratorglied. Das vorgeschlagene Verfahren enthält den Schritt, zumindest eine Wicklung des Elektromotors mit elektrischem Strom in Abhängigkeit der linearisierten Winkelposition zu beaufschlagen.

Man kann auch sagen: Der Rotor hat eine tatsächliche Winkelposition, die eine kontinuierliche Winkelposition ist. Diese kontinuierliche Winkelposition wird durch die Sensorschaltung in Stufen erfasst. Das Verfahren erzeugt erst eine abgestufte Winkelposition anhand von Sensorsignalen der Sensorschaltung, und dann eine linearisierte Winkelposition anhand der abgestuften Winkelposition. Man kann auch sagen, dass die Sensorschaltung zum Erfassen der Winkelposition des Rotors an einer von mehreren Winkelstufen eingerichtet ist.

Durch die genannte Reihenschaltung enthaltend das Schleifenfilter und das Integratorglied (auch als I-Glied bezeichnet) wird die abgestufte Winkelposition bzw. der grob abgestufte Verlauf der Winkelposition mit hoher Genauigkeit linearisiert. Somit ist das vorgeschlagene Verfahren geeignet für Motoransteuerverfahren, die eine hohe Winkelgenauigkeit benötigen, wie beispielsweise eine feldorientierte Beaufschlagung.

Das Schleifenfilter kann ein loop-Filter enthalten und/oder sein. Das Schleifenfilter enthält vorzugsweise einen PI-Regler oder einen PID-Regler. Unter einem PI-Regler kann man eine Parallelschaltung aus einem P-Glied (Ausgangssignal des Glieds ist proportional zu Eingangssignal) und einem I-Glied (Ausgangssignal des Glieds entspricht Integral des Eingangssignals) verstehen. Unter einem PID-Regler kann man eine Parallelschaltung aus einem P-Glied, einem I-Glied und einem D-Glied (Ausgangssignal des Glieds entspricht einem Differential des Eingangssignals) verstehen. Es kann sogar sein, dass das Schleifenfilter ein PI-Regler oder ein PID-Regler ist. Das Schleifenfilter ist also vorteilhaft als vergleichsweise effizienter Regler bzw. vergleichsweise effizientes Filter implementierbar. Das Schleifenfilter hat vorzugsweise keinen innerhalb des Schleifenfilters geschlossenen Regelkreis bzw. keine interne Rückführung.

Es kann sein, dass das Schleifenfilter eine Reihenschaltung aus einem Regler und einem Filter enthält, beispielsweise ein PI-Regler und ein dem PI-Regler nachgeschaltetes Filter oder ein PID-Regler und ein dem PID-Regler nachgeschaltetes Filter. Ein Schleifenfilter, das einen Regler und ein dem Regler in Reihenschaltung nachgeschaltetes Filter enthält, liefert ein glatteres Signal als ein Schleifenfilter, das "nur" einen Regler enthält. Mit anderen Worten, es kann sein, dass eine linearisierten Winkelposition des Rotors in Abhängigkeit der abgestuften Winkelposition mittels einer Reihenschaltung enthaltend einen Regler, ein dem Regler nachgeschaltetes Filter und ein dem Filter nachgeschalteten Integratorglied bestimmt wird.

Die mobile Werkzeugmaschine kann ein handgeführtes Elektrowerkzeug bzw. eine Handwerkzeugmaschine, beispielsweise eine Bohrmaschine, eine Schraubmaschine, eine Meißelmaschine, eine Schleifmaschine, eine Sägemaschine oder dergleichen sein. Denkbar ist auch, dass die mobile Werkzeugmaschine ein Bauroboter ist oder einen Bauroboter umfasst. Die mobile Werkzeugmaschine kann einen Manipulator, insbesondere einen mehrachsigen Manipulator, aufweisen. Der Elektromotor kann eine Antriebsvorrichtung zum Antrieb eines Werkzeugs, beispielsweise eines Bohrers, eines Meißels, eines Saugers oder dergleichen sein.

Die mobile Werkzeugmaschine kann beispielsweise zur Bearbeitung von Stein, wie Beton, und/oder Metall und/oder Holz eingerichtet sein. Sie kann beispielsweise zum Bohren, Meißeln, Sägen und / oder Schleifen ausgebildet sein.

Allgemein kann die mobile Werkzeugmaschine zur Ausführung von Arbeiten im Hoch- und/oder Tiefbau eingerichtet sein. Denkbar ist, dass sie nicht für einen Einsatz im Bergbau eingerichtet ist.

Die mobile Werkzeugmaschine kann tragbar sein; sie kann beispielsweise ein Gewicht von weniger als 50 kg, insbesondere von weniger als 25 kg, aufweisen.

Das Erfassen der abgestuften Winkelposition enthält vorzugsweise ein Erfassen mehrerer Sensorsignale bzw. ein Erfassen (Auslesen, Empfangen) jeweils eines Sensorsignals von mehreren Sensoren, die jeweils zum Erfassen einer Winkelposition geeignet angeordnet sind. Es kann sein, dass das Verfahren vorsieht, dass die Sensorsignale binär ausgewertet werden. Unter einem binären Auswerten kann man beispielsweise verstehen, dass bei einem Überschreiten eines Schwellwerts ein erster Zustand erkannt wird, und bei einem Unterschreiten desselben oder eines anderen Schwellwerts ein zweiter Zustand erkannt wird, welcher zu dem ersten Zustand komplementär ist. Man kann auch sagen, dass vorzugsweise die Sensorsignale jeweils zu einem binären Zustand ausgewertet werden.

Die Sensorschaltung ist vorzugsweise eine Hall-Sensorschaltung. Das Erfassen der abgestuften Winkelposition sieht somit vorzugsweise ein Erfassen mehrerer Hallsensorsignale und ein Ermitteln einer einzigen abgestuften Winkelposition in Abhängigkeit der mehreren Hallsensorsignale vor.

Beispielsweise falls die Sensorschaltung als eine Hallsensorschaltung enthaltend drei Hallsensoren ausgeführt ist, kann die abgestufte Winkelposition eine von bis zu 6 Winkelpositionen sein. Mit anderen Worten, es kann sein, dass die abgestufte Winkelposition (ein aktuell erfasster Wert) einen von 6 abgestuften Werten annehmen kann. Dabei ist diese Abstufung nicht an das Messprinzip nach Hall gebunden, und dieselbe Abstufung kann auch mit anderen binär auswertbaren Sensoren erfolgen. Außerdem ist es bevorzugt, falls die abgestufte Winkelposition eine von bis zu 12 Winkelpositionen ist, sodass die abgestufte Winkelposition auf 30° genau ist. Diese Abstufungsraster stellen bevorzugte Kompromisse aus einer niedrigen Sensoranzahl und einer verlässlichen Abstufung bzw. Quantisierung dar.

Es kann sein, dass die linearisierte Winkelposition durch einen diskreten Wert beschrieben wird, wobei eine Auflösung der abgestuften Winkelposition zumindest eine Größenordnung und bevorzugt zumindest zwei Größenordnungen grober als eine Auflösung der linearisierten Winkelposition ist. Insbesondere falls die Winkelpositionen als binäre Werte verarbeitet werden, beispielsweise mittels eines digitalen oder teilweise digitalen Signalprozessors, kann es wichtig sein, die Auflösung der linearisierten Winkelposition zu der Auflösung der abgestuften Winkelposition zu unterscheiden. Der Begriff der Größenordnung bezieht sich vorzugsweise auf eine dezimale Größenordnung bei Notierung des Winkels in Grad, auch falls das Verfahren selber nicht in Grad ausgeführt wird. Beispielsweise falls die abgestufte Winkelposition mit einer Genauigkeit von 60° bzw. 1/3 π aufgelöst wird, wird die linearisierte Winkelposition somit mit einer Genauigkeit von 6° bzw. 1/30 π oder feiner und vorzugsweise mit einer Genauigkeit von 0,6° bzw. 1/300 π oder feiner aufgelöst.

Es kann sein, dass das Verfahren in einer einfachen Ausführung keine veränderlichen Parameter des Schleifenfilters und des Integratorglieds vorsieht. Beispielsweise kann ein Fachmann Parameter verwenden, welche beispielsweise für einen Arbeitspunkt oberhalb von 50% einer Nenndrehzahl des Elektromotors optimiert sein können. Vorzugsweise aber enthält das Verfahren den Schritt: Ermitteln zumindest eines Parameters des Schleifenfilters in Abhängigkeit einer Winkelgeschwindigkeit des Rotors. Vorzugsweise enthält das Verfahren den Schritt: Ermitteln zumindest eines Parameters des Integratorglieds in Abhängigkeit einer Winkelgeschwindigkeit des Rotors. Dabei wird der zumindest eine Parameter vorzugsweise in Abhängigkeit einer aktuellen und/oder einer zuletzt ermittelten Winkelgeschwindigkeit ermittelt. Als Maß für die Winkelgeschwindigkeit wird vorzugsweise ein Wert verwendet, der von dem Schleifenfilter ausgegeben und/oder in das Integratorglied eingegeben wird. Mit anderen Worten, es wird vorzugsweise ein Wert zwischen dem Schleifenfilter und dem Integratorglied verwendet. Der zumindest eine Parameter kann beispielsweise mittels einer mathematischen Funktion oder einer Tabelle ausgewählt werden. Wie später noch gezeigt wird, kann man durch zu der Winkelgeschwindigkeit passende Parameter die Linearisierung spürbar verbessern.

Es kann sein, dass das Verfahren, insbesondere das Erfassen der abgestuften Winkelposition, enthält: Empfangen jeweils eines Sensorsignals von mehreren Sensoren der Sensorschaltung, und Erzeugen der abgestuften Winkelposition entsprechend den mehreren Sensorsignalen. Man kann auch sagen, dass die Sensorschaltung vorzugsweise mehrere Sensoren enthält und von jedem dieser Sensoren ein (aktuelles) Sensorsignal empfangen wird, um aus diesen empfangenen Sensorsignalen die abgestufte Winkelposition zu errechnen bzw. deren Wert zu erzeugen. Mit "Erzeugen" der abgestuften Winkelposition ist hier nicht ein Verdrehen des Rotors, sondern ein Erzeugen eines Signalwerts gemeint, man kann auch "Berechnen" oder "Bestimmen" sagen.

Es kann sein, dass die beaufschlagte Wicklung eine Statorwicklung ist. Somit sieht das vorgeschlagene Verfahren beispielsweise vor, zumindest eine Statorwicklung des Elektromotors in Abhängigkeit der linearisierten Winkelposition mit elektrischem Strom zu beaufschlagen. Das Verfahren kann beispielsweise vorsehen, jede der Statorwicklungen entsprechend der linearisierten Rotorwinkelposition mit elektrischem Strom zu beaufschlagen. Der Begriff "beaufschlagen mit elektrischem Strom" kann bedeuten, eine Zufuhr von elektrischem Strom zu der jeweiligen Wicklung vorzugeben, einschließlich der Möglichkeit, in einem bestimmtem Augenblick 0A zu beaufschlagen / vorzugeben. Es wird also ein an bürstenlose Motoren angepasstes Verfahren vorgeschlagen.

Weiterhin wird ein Computerprogrammprodukt vorgeschlagen, welches Befehle umfasst, die bei der Ausführung des Programms durch einen Computer diesen veranlassen, das vorstehend beschriebene Verfahren auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem weiteren Aspekt der Erfindung wird ein Steuergerät für eine mobile Werkzeugmaschine vorgeschlagen. Das vorgeschlagene Steuergerät enthält eine Schaltung, die zum Ausführen des oben vorgeschlagenen Verfahrens zum Betreiben der mobilen Werkzeugmaschine eingerichtet ist. Die für das vorgeschlagene Verfahren beschriebenen Ausführungsformen und Merkmale gelten für das vorgeschlagene Steuergerät entsprechend.

Es kann sein, dass die Schaltung einen digitalen Regler enthält, der beispielsweise ein Prozessor ist. Digitale Regler können mehrere Aufgaben gleichzeitig bzw. in demselben Bauteil wahrnehmen, dies senkt einen Energieverbrauch. Außerdem sind beispielsweise Anpassungen an dem Verfahren häufig mit Softwareupdates vornehmbar.

Es kann sein, dass das Steuergerät die Sensorschaltung enthält bzw. baulich integriert, welche zum abgestuften Erfassen der Winkelposition eingerichtet ist. Beispielsweise ist das Steuergerät als eine Platine mit elektrischen und elektronischen Bauteilen ausgeführt, wobei die "Bauteile" die Sensorschaltung und die Schaltung zum Ausführen des Verfahrens beinhalten. Es kann sein, dass die Platine mit den Bauteilen durch eine Vergussmasse miteinander fixiert sind. Somit kann eine Signalverbindung zwischen der Sensorschaltung und dem restlichen Steuergerät schon vor einem Einbau in eine mobile Werkzeugmaschine getestet und sichergestellt werden.

Gemäß einem weiteren Aspekt der Erfindung wird eine mobile Werkzeugmaschine vorgeschlagen. Die vorgeschlagene Werkzeugmaschine enthält einen Elektromotor, eine Sensorschaltung und das vorgeschlagene Steuergerät. Der Elektromotor hat einen Stator und einen Rotor zum Antreiben eines Werkzeugs. Die Sensorschaltung ist zum abgestuften Erfassen einer Winkelposition des Rotors konfiguriert. Die für das vorgeschlagene Verfahren beschriebenen Ausführungsformen und Merkmale gelten für die vorgeschlagene Werkzeugmaschine entsprechend.

Es kann sein, dass die Sensorschaltung Teil des Steuergeräts ist. Man kann auch sagen, dass die Sensorschaltung in das Steuergerät integriert ist. Man kann auch von einer Baugruppe sprechen. Diese Bauweise wird vorzugsweise damit kombiniert, dass das Steuergerät benachbart zu dem Rotor angeordnet ist. Dadurch wird eine zuverlässige und kompakte Werkzeugmaschine erhalten.

Es kann außerdem sein, dass der Elektromotor ein bürstenloser Gleichstrommotor ist, und/oder dass das Steuergerät zum Beaufschlagen einer Wicklung des Stators mit elektrischem Strom eingerichtet und/oder verschaltet ist. Diese Optionen stellen bevorzugte Ausgestaltungen dar, die als besonders haltbar bzw. verschleißsicher erachtet werden.

Die für das vorgeschlagene Verfahren und/oder das vorgeschlagene Steuergerät beschriebenen Ausführungsformen und Merkmale gelten für die vorgeschlagene Werkzeugmaschine entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

### KURZE BESCHREIBUNG DER FIGUREN

Die nachfolgende Beschreibung erläutert die Erfindung anhand von exemplarischen Ausführungsformen und Figuren. In den Figuren zeigt:
- Fig. 1: schematisch eine mobile Werkzeugmaschine in einer teilgeschnittenen Seitenansicht;
- Fig. 2: schematisch eine axiale Sicht auf einen Elektromotor und mehrere axial vor einem Rotor des Elektromotors angeordnete Sensoren zum Erfassen einer Winkelposition des Rotors;
- Fig. 3: schematisch ein Diagramm zum Erläutern eines Erkennens einer tatsächlichen Winkelposition des in Fig. 2 gezeigten Rotors und deren Erfassens als eine abgestufte Winkelposition;
- Fig. 4: schematisch eine Überlagerung eines Verlaufs einer abgestuften Winkelposition mit einer linearisierten Winkelposition, welche mittels des vorgeschlagenen Verfahrens auf Grundlage der abgestuften Winkelposition bestimmt wurde, und synchron dazu einen Verlauf eines Ergebnisses eines Schleifenfilters;
- Fig. 5: ein Systemdiagramm einer vorgeschlagenen mobilen Werkzeugmaschine, welche auch Funktionen des vorgeschlagenen Steuergeräts illustriert; und
- Fig. 6: ein Ablaufdiagramm eines vorgeschlagenen Verfahrens zum Betreiben einer mobilen Werkzeugmaschine, wie sie beispielsweise in den vorherigen Figuren illustriert wird.

Gleiche oder funktionsgleiche Elemente werden durch gleiche Bezugszeichen in den Figuren indiziert, soweit nichts anderes angegeben ist.

### AUSFÜHRUNGSFORMEN DER ERFINDUNG

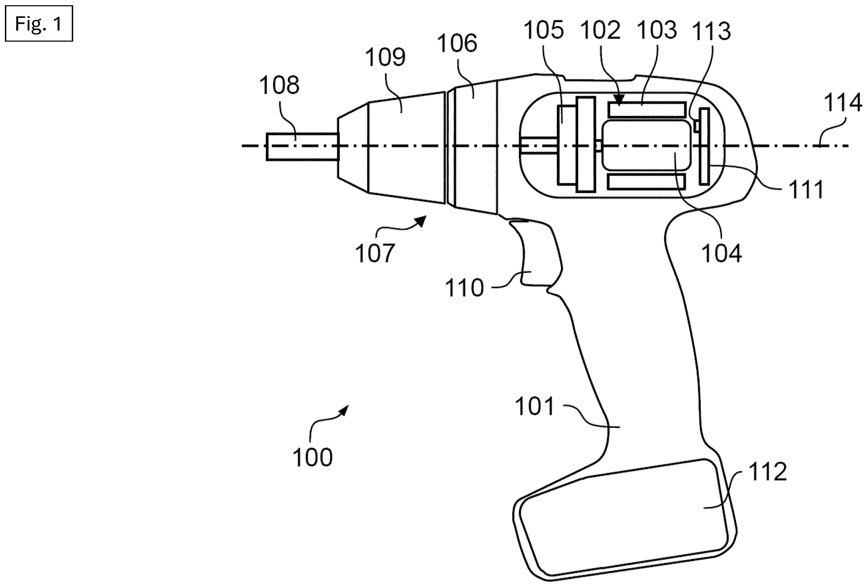

Die Fig. 1 zeigt eine mobile Werkzeugmaschine 100. Die Werkzeugmaschine 100 ist beispielhaft eine Handwerkzeugmaschine, genauer gesagt eine Bohrmaschine. Weitere bevorzugte Ausführungsformen umfassen eine Schleifmaschine oder eine Sägemaschine. Die Werkzeugmaschine 100 hat ein Gehäuse 101 zum Schützen und Lagern weiterer Bauteile. Die Werkzeugmaschine 100 ist als tragbares Gerät ausgebildet. Sie weist ein Gewicht zwischen 0,5 und 15 kg und allgemein von weniger als 25 kg auf.

Die Werkzugmaschine 100 hat einen Elektromotor 102, der einen Stator 103 und einen Rotor 104 hat. Der Rotor 104 ist beispielsweise über ein Getriebe 105 mit einer Spindel 106 einer Werkezugaufnahme 107 rotationsgekoppelt. Das Getriebe 105 ist beispielsweise ein Untersetzungsgetriebe. Es kann sein, dass das Getriebe 105 zwischen mehreren Übersetzungen schaltbar ist. Es kann sein, dass die Werkzeugmaschine 100 ein Schlagwerk enthält, das als Teil des Getriebes 105 oder der Werkzeugaufnahme 107 ausgeführt und/oder zwischen das Getriebe 105 und die Werkzeugaufnahme 107 geschaltet ist.

Die Werkzeugaufnahme 107 ist vorzugsweise zur Aufnahme eines wechselbaren Werkzeugs 108 konfiguriert. Beispielsweise kann durch ein Verdrehen eines Griffs 109 der Werkzeugaufnahme 107 gegenüber der Spindel 106 ein (nicht dargestelltes) Futter der Werkzeugaufnahme 107 geöffnet und/oder geschlossen werden. Beispielsweise handelt es sich um ein Schnellspannbohrfutter, ein SDS-Bohrfutter und/oder ein TE-C-Borfutter. Mittels der Werkzeugaufnahme 107 ist das Werkzeug 108 beispielsweise rotierend und/oder schlagend und/oder hämmernd antreibbar.

Der Elektromotor 102 ist beispielsweise ein bürstenloser Gleichstrommotor. Der Elektromotor 102 ist zum Erzeugen eines Drehmoments zwischen dem Stator 103 und dem Rotor 104 betreibbar. Eine Steuervorrichtung 111 ist dazu konfiguriert, auf eine Betätigung eines Betätigungselements 110 hin einen elektrischen Stromfluss von einer Stromquelle 112 zu dem Stator 103 zu schalten. Die Stromquelle 112 ist vorzugweise ein Akkumulator oder eine Schaltung mehrerer Akkumulatoren, sie kann aber auch ein Netzteil sein.

Beispielsweise ist die Steuervorrichtung 111 dazu eingerichtet, eine Rotationslage (Rotationswinkel und/oder Winkelgeschwindigkeit) des Rotors 104 relativ zu dem Gehäuse 101 mittels einer Sensorschaltung 113 zu erfassen und (nicht dargestellte) Wicklungen des Stators 103 mit elektrischem Strom einzeln und nacheinander zu beaufschlagen. Die Steuervorrichtung 111 hat dazu beispielsweise eine Auswertelogik, und sie kann beispielsweise zum Ausführen eines Computerprogramms eingerichtet sein, dessen Befehle die Steuervorrichtung 111 dazu bringen, ein Verfahren zum Betreiben der mobilen Werkzeugmaschine 100 auszuführen.

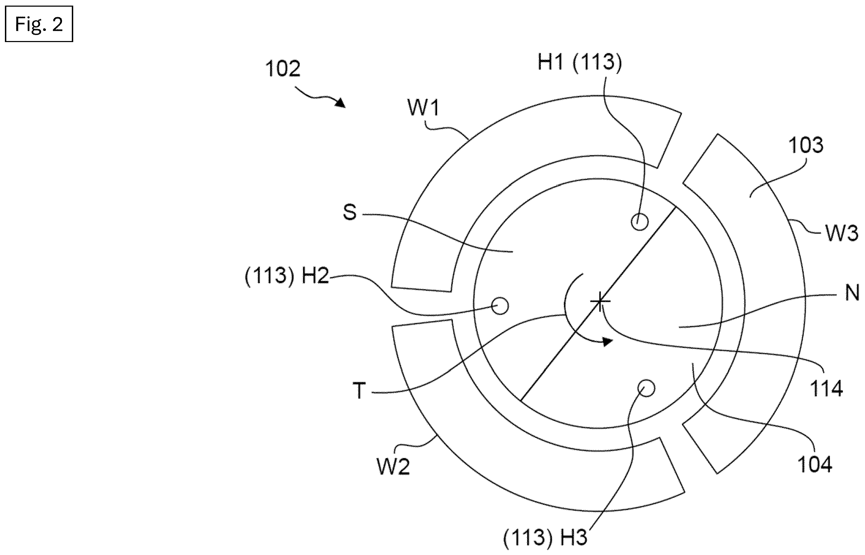

Die Fig. 2 zeigt in stark schematisierter Weise eine axiale Sicht auf den Elektromotor 102 sowie eine Anordnung einzelner Sensoren H1 bis H3 der Sensoranordnung 113. Die Sensoren H1 bis H3 sind vorzugsweise Hallsensoren, sodass die Sensoranordnung 113 bevorzugt eine Hallsensoranordnung ist.

Es ist hierbei anzumerken, dass die Erfindung auch auf andere Elektromotoren als Elektromotoren der in der Fig. 2 gezeigten Bauart anwendbar ist. Beispielsweise ist die Erfindung auch auf Elektromotoren mit Nut/Polkonfiguration anwendbar. Beispielsweise ist die Erfindung auch auf 6-nutige und/oder 4-polige Elektromotoren bzw. auf 6-nutige 4-polig ansteuerbare Elektromotoren anwendbar.

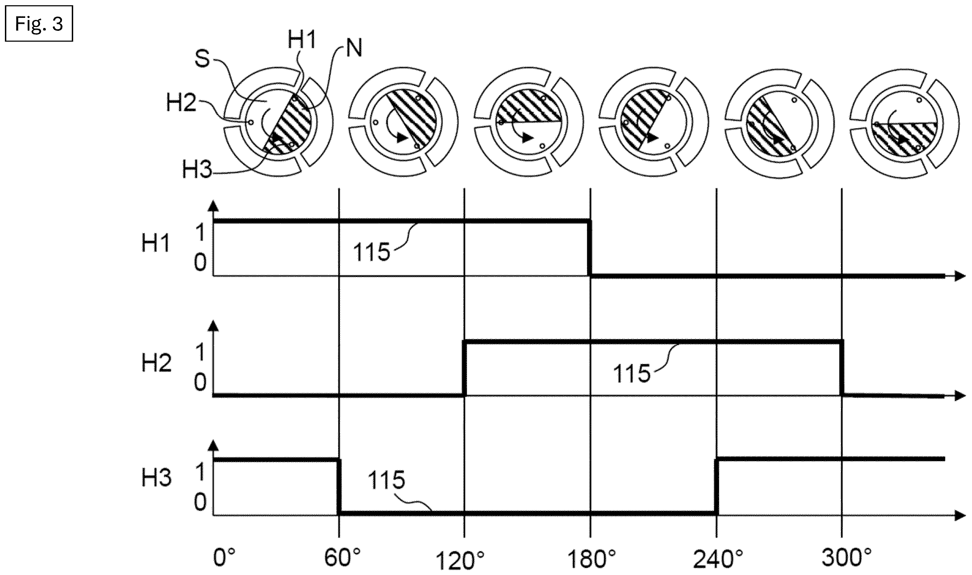

Der Rotor 104 hat ein Rotor-festes Magnetfeld, dessen Orientierung in der Fig. 2 durch "N" und "S" und in der Fig. 3 durch je einen schraffierten und einen nicht-schraffierten Bereich dargestellt wird. Der Stator 103 enthält mehrere Wicklungen W1 bis W3. Indem die Wicklungen W1 bis W3 von elektrischem Strom durchflossen werden, wird ein magnetisches Feld erzeugt, welches im Zusammenwirken mit dem Rotor-festen Magnetfeld N-S ein Drehmoment T auf den Rotor 104 um eine Längsachse 114 des Rotors 104 ausübt, um letztlich das Werkzeug 108 anzutreiben.

Die Lage des Rotor-festen Magnetfelds N-S wird durch die Hallsensoren H1-H3 detektiert. Die Fig. 3 zeigt beispielhaft Verläufe von Sensorsignalen 115 der Hallsensoren H1 bis H3 entsprechend den gezeigten Magnetfeldlagen. Dargestellt ist im oberen Teil eine Sequenz von Winkelpositionen des Rotors 104, welche jeweils eine unterschiedliche Ausrichtung des Magnetfelds N-S bedeuten. Das Magnetfeld N-S wird durch die schraffierte Hälfte und die nicht-schraffierte Hälfte angedeutet.

Beispielsweise werden die Sensorsignale 115 als binäre Signale aufgefasst, wobei eine Hallspannung unter einem Schwellwert als "0" und eine Hallspannung über dem Schwellwert als "1" interpretiert wird. Wie man anhand der Fig. 3 deutlich erkennen kann, ist jede Winkelposition des Rotors 104 um die Längsachse 114 Teil eines von sechs Bereichen, welche Bereiche jeweils durch eine individuelle Kombination der Sensorsignale 115 der drei Sensoren H1 bis H3 der Sensorschaltung 113 charakterisiert sind. Anders gesagt:
Sensorsignale der drei Sensoren H1 bis H3 ergeben sechs Winkelbereiche, welche sich hinsichtlich der Kombinationen der Sensorsignale 115 unterscheiden.

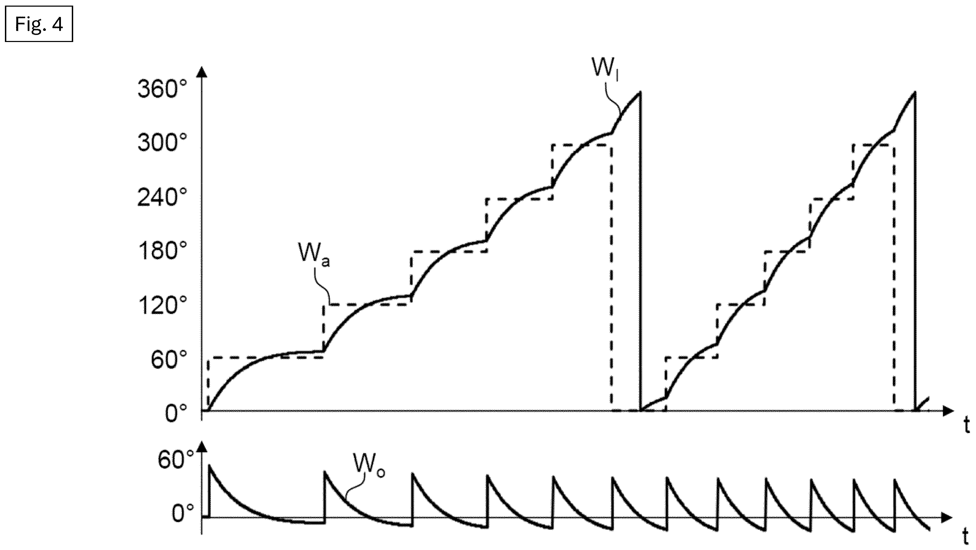

Mittels einer Erfassungseinheit 116 kann die Kombination der Sensorsignale 115 in eine abgestufte Winkelposition Wₐ übersetzt werden. Die Fig. 4 zeigt im oberen Teil eine Überlagerung eines Verlaufs einer abgestuften Winkelposition Wₐ und einer linearisierten Winkelposition Wₗ. Diese linearisierte Winkelposition Wₗ ist mittels einer Simulation der im Folgenden beschriebenen Schaltung bzw. gemäß Schritten des im Folgenden beschriebenen Verfahrens aus dieser abgestuften Winkelposition Wₐ berechnet. Wenn man den Verlauf der Winkelfunktionen Wₐ und Wₗ betrachtet, stellt man fest, dass eine beschleunigte Bewegung vorliegt, weil mit fortschreitender Zeit t immer kürzere Zeitintervalle je 60°-Bereich benötigt werden.

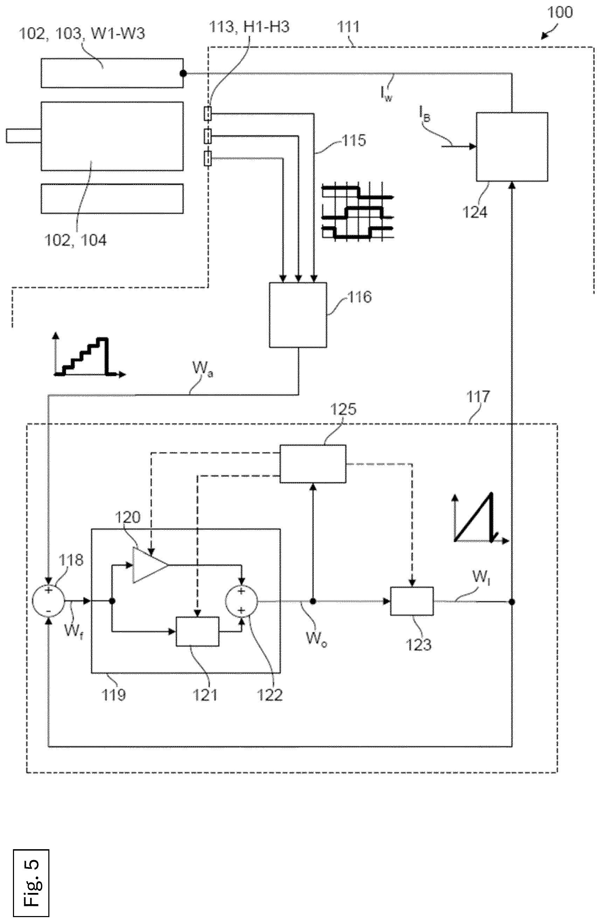

Die Fig. 5 zeigt eine beispielhafte Schaltung, welche in der oben beschriebenen mobilen Werkzeugmaschine 100 umgesetzt sein kann. Der Elektromotor 102 hat den Stator 103 mit den Wicklungen W1 bis W3 und den Rotor 104. Axial benachbart zu dem Rotor 104 ist das Steuergerät 111 angeordnet, welches die Sensorschaltung 113 enthaltend die drei Hallsensoren H1 bis H3 trägt. Die Hallsensoren H1 bis H3 sind symmetrisch um die Längsachse 114 herum angeordnet, auch wenn dies aus der Darstellung der Fig. 5 nur schwerlich zu erkennen ist.

Die Hallsensoren H1 bis H3 erzeugen jeweils ein binäres Sensorsignal 115, wie es die Fig. 3 illustriert. Die Sensoren H1 bis H3 der Sensorschaltung 113 sind beispielsweise je einzeln mit der Erfassungseinheit 116 verbunden. Die Erfassungseinheit 116 erfasst in Abhängigkeit der einzelnen Sensorsignale 115 die aktuelle abgestufte Winkelposition Wₐ erfasst. Diese Erfassungseinheit 116 ist beispielsweise als ein A/D-Wandler ausgeführt und/oder enthält beispielsweise zumindest einen A/D-Wandler. Die Erfassungseinheit 116 kann beispielsweise auch als rein digitale Erfassungseinheit ausgeführt sein. Die Erfassungseinheit 116 ist dazu eingerichtet, jeweils ein Sensorsignal 115 von den mehreren Sensoren H1 bis H3 der Sensorschaltung 113 zu empfangen. Die Erfassungseinheit 116 ist ferner dazu eingerichtet, die abgestufte Winkelposition Wₐ in Abhängigkeit der mehreren Sensorsignale 115 derart zu erzeugen, dass die abgestufte Winkelposition Wₐ den mehreren Sensorsignalen 115 zusammen bzw. gemeinsam entspricht. Somit ist die Erfassungseinheit 116 dazu eingerichtet, ein Erfassen der abgestuften Winkelposition Wₐ mittels der Sensorschaltung 113 auszuführen.

Hier werden einzelne Funktionselemente beschrieben, die sowohl als Schaltungselemente in/an dem Steuergerät 111 vorhanden sein können, aber die auch als Softwarefunktionen in einem digitalen Prozessor 117 erfüllt sein können. Dem Fachmann ist sofort klar, dass auch Mischformen mit Vorteil möglich sind.

Die abgestufte Winkelposition Wₐ wird in einen ersten Summierer 118 eingegeben, welcher eine Differenz aus der abgestuften Winkelposition Wₐ und der aktuellen bzw. zuletzt bestimmten linearisierten Winkelposition Wₗ bildet. Man kann dies als einen Regelungsfehler bzw. einen Phasenfehler W_{f} zwischen der abgestuften Winkelposition Wₐ und der linearisierten Winkelposition Wₗ auffassen.

Der Phasenfehler W_{f} wird dann in ein Schleifenfilter 119 eingegeben. Das Schleifenfilter 119 enthält vorliegend einen PI-Regler, also eine Parallelschaltung eines Proportionalglieds 120 mit einem ersten Integratorglied 121. Außerdem enthält das Schleifenfilter einen zweiten Summierer 122, welcher die Ergebnisse des Proportionalglieds 120 und des ersten Integratorglieds 121 addiert. Das Ergebnis Wₒ des Schleifenfilters ist beispielhaft in der unteren Hälfte der Fig. 4 illustriert.

Man kann einen Mittelwert des Ergebnisses Wₒ des zweiten Summierers 122 bzw. des Ergebnisses Wₒ des Schleifenfilters 119 als eine Winkelgeschwindigkeit des Rotors 104 bzw. ein der Winkelgeschwindigkeit entsprechendes Signal interpretieren.

Dieser Wert Wₒ wird dann in ein zweites Integratorglied 123 eingegeben, welches daraus die linearisierte Winkelposition Wₗ ermittelt. Es liegt also eine Reihenschaltung vor, welche in dieser Reihenfolge das Schleifenfilter 119 und das zweite Integratorglied 123 enthält. Man kann auch der Ansicht sein, dass die Reihenschaltung in dieser Reihenfolge den Summierer 118, das Schleifenfilter 119 und das zweite Integratorglied 123 aufweist.

Die linearisierte Winkelposition Wₗ wird dann als geschlossene Regelschleife zurück an den ersten Summierer 118 geführt. Der erste Summierer 118 bildet also lediglich eine Summe aus der abgestuften Winkelposition Wₐ und (mit umgekehrtem Vorzeichen) der linearisierten Winkelposition Wₗ aber ohne Berücksichtigung des Ergebnisses Wₒ des Schleifenfilters, also ohne Berücksichtigung des Zwischenergebnisses.

Außerdem wird die linearisierte Winkelposition einer Beaufschlagungseinheit 124 zugeführt. Die Beaufschlagungseinheit 124 ist dazu eingerichtet und verschaltet, die Wicklungen W1 - W3 des Elektromotors 102 mit elektrischem Strom Iw zu beaufschlagen, und zwar in Abhängigkeit der linearisierten Winkelposition Wₗ. Die Beaufschlagungseinheit kann beispielsweise als eine Pulsweitenmodulationseinheit ausgeführt sein. Die Beaufschlagungseinheit hat beispielsweise einen Eingang für Strom I_{B} von der Batterie 112 und einen Ausgang je Wicklung W1 bis W3 zum Zuführen von Strom Iw zu der jeweiligen Wicklung W1 bis W3. Die Beaufschlagungseinheit 124 ist vorzugsweise zur feldorientierten Beaufschlagung der Wicklungen W1 bis W3 eingerichtet.

Somit ist die Werkzeugmaschine 100 dazu eingerichtet, eine abgestufte Winkelposition Wₐ in einer linearisierte Winkelposition Wₗ umzuformen. Außerdem ist die Werkzeugmaschine 100 dazu eingerichtet, den Elektromotor 102 auf Grundlage der linearisierten Winkelposition Wₗ besonders effizient und/oder optimiert zu betreiben, beispielsweise mittels eines Verfahrens zum feldorientierten Beaufschlagen des Elektromotors 102 mit elektrischem Strom Iw.

Die Schaltung der Fig. 5 zeigt außerdem eine optionale Wähleinheit 125. Die Wähleinheit 125 ist beispielsweise dazu eingerichtet, auf Grundlage des Ergebnisses Wₒ des Schleifenfilters 119 einen oder mehrere Parameter auszuwählen, welche/-r in dem Schleifenfilter 119 und/oder dem zweiten Integrator 123 verwendet wird/werden. Beispielsweise wird ein Mittelwert des Ergebnisses Wₒ je Stufe der abgestuften Winkelposition Wₐ als Maß für die Winkelgeschwindigkeit bestimmt.

Beispiele für solche Parameter umfassen Koeffizienten, wie den Faktor des Proportionalglieds 118, eine Nachstellzeit des ersten Integrators 121 und/oder eine Nachstellzeit des zweiten Integrators 123. Man kann anhand der Fig. 4 sehen, dass die Parameter, welche in dieser Simulation verwendet wurden, bei den rascheren Wechseln der abgestuften Winkelpositionen Wₐ (rechts im Diagramm) einen glatteren Verlauf der linearisierten Winkelposition Wₗ, als bei den langsameren Wechseln (links im Diagramm) ergeben.

Es kann beispielsweise sein, dass mehrere Beaufschlagungseinheiten 124 vorgesehen sind. Beispielsweise kann es sein, dass für jede der Wicklungen W1 bis W3 eine eigene Beaufschlagungseinheit 124 vorgesehen ist. Dem Fachmann erscheinen hierbei auch weitere Ausgestaltungen möglich.

Die in der Fig. 5 gezeigte Grenze für Elemente des digitalen Prozessors 117 sind ein Beispiel. Es kann beispielsweise sein, dass die Erfassungseinheit 116 in den Prozessor 117 integriert ist. Es kann sich auch um eine Kombination mehrerer digitaler Bauteile handeln.

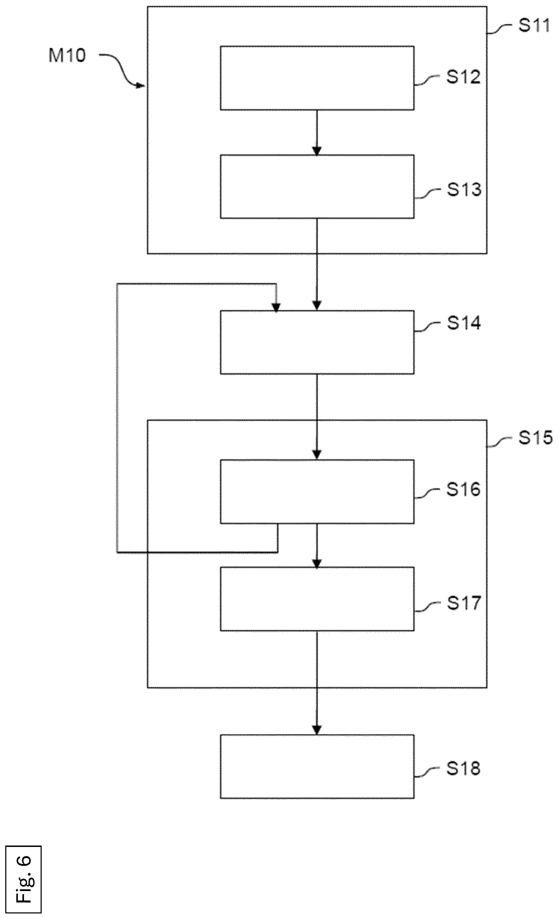

Als nächstes wird ein Verfahren M10 zum Betreiben der mobilen Werkzeugmaschine 100 anhand des Ablaufdiagramms der Fig. 6 und unter Rückgriff auf die vorstehende Beschreibung dargelegt.

In einem ersten Verfahrensschritt S11 wird die abgestufte Winkelposition Wₐ mittels der Sensorschaltung 113 bzw. mittels der Hallsensoren H1 bis H3 der Sensorschaltung 113 durch die Erfassungseinheit 116 erfasst. Dieser Erfassungs-Schritt S11 ist beispielsweise aufgeteilt in zwei Teil-Schritte S12 und S13. In dem Teilschritt S12 wird von den mehreren Hallsensoren H1 bis H3 der Sensorschaltung 113 jeweils ein Sensorsignal 115 empfangen. In dem Teilschritt S13 wird die abgestufte Winkelposition Wₐ entsprechend den mehreren Sensorsignalen 115 erzeugt. Beispielsweise wird über eine Logikschaltung jeder der Fig. 3 gezeigten Signalkombinationen eine Stufe des abgestuften Winkelsignals Wₐ zugewiesen. Auf diese Weise kann beispielsweise auch eine Rückwärtsrotation des Rotors 104 korrekt detektiert werden.

In einem nächsten Schritt S14 wird der zumindest eine Parameter des Schleifenfilters 119 in Abhängigkeit der Winkelgeschwindigkeit Wₒ ermittelt. Wie beschrieben, kann man hierfür beispielsweise eine mathematische Funktion oder eine Tabelle (fachsprachlich look-up table) einsetzten. Dem Fachmann sind noch weitere Alternativen und/oder Kombinationen bekannt.

Dann wird in einem Schritt S15 die linearisierten Winkelposition Wₗ mittels der Reihenschaltung aus dem Schleifenfilter 119 und dem zweiten Integratorglied 123 in Abhängigkeit der abgestuften Winkelposition Wₐ ermittelt. Dass eine Position "in Abhängigkeit" bzw. "auf Grundlage" einer anderen Position ermittelt wird, kann beispielsweise bedeuten, dass ein zu ermittelnder Wert eines Signals und/oder einer Variablen entsprechend einem bekannten Wert eines Signals und/oder einer Variablen bestimmt wird. Es besteht also ein kausaler Zusammenhang zwischen dem Wert der abgestuften Winkelposition Wₐ (d.h. der aktuellen Stufe) und dem Wert der linearisierten Winkelposition Wₗ. Dieser kausale Zusammenhang ist dem Fachmann aus der Fig. 4 unmittelbar offensichtlich.

Der Schritt S15 kann beispielsweise Teilschritte S16 und S17 haben. In dem Teilschritt S16 wird die Winkelgeschwindigkeit Wₒ mittels des Schleifenfilters 119 in Abhängigkeit der abgestuften Winkelposition Wₐ ermittelt bzw. bestimmt. Beispielsweise wird der Wert der Winkelgeschwindigkeit Wₒ mittels des Signalprozessors 117 berechnet. In dem Teilschritt S17 wird die linearisierte Winkelposition Wₗ mittels des zweiten Integratorglieds 123 (d.h. dem Integratorglied 123, welches dem Schleifenfilter 119 in der Reihenschaltung nachgeschaltet ist) bestimmt.

Dann wird in einem Schritt S18 zumindest eine der Statorwicklungen W1 bis W3 mit elektrischem Strom I_{w} beaufschlagt, wobei die Stromstärke von dem Wert der linearisierten Winkelposition Wₗ abhängt. Man kann auch sagen, dass die Beaufschlagungseinheit 124 den Wicklungen W1 bis W3 entsprechend der linearisieren Winkelposition Wₗ elektrischen Strom zuführt.

Das Verfahren M10 wird vorzugsweise wiederholt, getaktet und/oder in Intervallen ausgeführt. Es kann auch sein, dass das Verfahren M10 kontinuierlich ausgeführt wird. Dem Fachmann sind diese, weitere und auch kombinierende Ausführungsweise aus seinem Wissen ersichtlich.

Obwohl die vorliegende Erfindung anhand von Ausführungsbeispielen beschrieben wurde, ist sie vielfältig modifizierbar.

### BEZUGSZEICHENLISTE

- 100: mobile Werkzeugmaschine
- 101: Gehäuse
- 102: Elektromotor
- 103: Stator
- 104: Rotor
- 105: Getriebe
- 106: Spindel
- 107: Werkzeugaufnahme
- 108: Werkzeug
- 109: Griff
- 110: Betätigungselement
- 111: Steuervorrichtung
- 112: Stromquelle
- 113: Sensorschaltung
- 114: Längsachse
- 115: binäres Signal
- 116: Erfassungseinheit
- 117: digitaler Prozessor
- 118: erster Summierer
- 119: Schleifenfilter
- 120: Proportionalglied des Schleifenfilters
- 121: erstes Integratorglied bzw. Integratorglied des Schleifenfilters
- 122: zweiter Summierer bzw. Summierer des Schleifenfilters
- 123: zweiter Integrator
- 124: Beaufschlagungseinheit
- 125: Wähleinheit
- H1: Hallsensor
- H2: Hallsensor
- H3: Hallsensor
- I_{B}: Batteriestrom
- Iw: einer Wicklung zugeführter Strom
- N: Nordpol des Rotor-festen Magnetfelds
- S: Südpol des Rotor-festen Magnetfelds
- T: Drehmoment
- W1: Wicklung des Stators
- W2: Wicklung des Stators
- W3: Wicklung des Stators
- W_{f}: Winkelfehler zwischen abgestufter Winkelposition und linearisierte Winkelposition
- Wₐ: abgestufte Winkelposition
- Wₒ: Ergebnis des Schleifenfilters
- Wₗ: linearisierte Winkelposition
- M10: Verfahren zum Betreiben einer mobilen Werkzeugmaschine
- S11: Erfassen einer abgestuften Winkelposition mittels der Sensorschaltung
- S12: Empfangen jeweils eines Sensorsignals von mehreren Sensoren der Sensorschaltung
- S13: Erzeugen der abgestuften Winkelposition entsprechende den mehreren Sensorsignalen
- S14: Ermitteln zumindest eines Parameters des Schleifenfilters in Abhängigkeit einer Winkelgeschwindigkeit
- S15: Bestimmen einer linearisierten Winkelposition
- S16: Bestimmen einer Winkelgeschwindigkeit mittels eines Schleifenfilters in Abhängigkeit der abgestuften Winkelposition
- S17: Bestimmen der linearisierten Winkelposition mittels eines dem Schleifenfilter in Reihenschaltung nachgeschalteten Integratorglieds
- S18: Beaufschlagen zumindest einer Stator-Wicklung mit elektrischem Strom in Abhängigkeit der linearisierten Winkelposition

## Patentansprüche

1. Verfahren (M10) zum Betreiben einer mobilen Werkzeugmaschine (100), wobei die Werkzeugmaschine (100) eine Sensorschaltung (113) hat, welche zum abgestuften Erfassen einer Winkelposition (Wₐ) eines Rotors (104) eines Elektromotors (102) konfiguriert ist, enthaltend die Schritte:
Erfassen (S11) einer abgestuften Winkelposition (Wₐ) des Rotors (104) mittels der Sensorschaltung (113);
Bestimmen (S15) einer linearisierten Winkelposition (Wₗ) des Rotors (104) in Abhängigkeit der abgestuften Winkelposition (Wₐ) mittels einer Reihenschaltung enthaltend ein Schleifenfilter (119) und ein nachgeschaltetes Integratorglied (123); und
Beaufschlagen (S18) zumindest einer Wicklung (W1, W2, W3) des Elektromotors (102) mit elektrischem Strom (I_{w}) in Abhängigkeit der linearisierten Winkelposition (Wₗ).

2. Verfahren nach Anspruch 1, wobei das Schleifenfilter (119) ein PI-Regler (120, 121, 122) oder ein PID-Regler enthält oder ist.

3. Verfahren nach einem der vorigen Ansprüche, wobei die Sensorschaltung (113) eine Hall-Sensorschaltung ist.

4. Verfahren nach einem der vorigen Ansprüche, die erfasste abgestufte Winkelposition (Wₐ) eine von bis zu 12 Winkelpositionen, bevorzugt bis zu 6 Winkelpositionen ist.

5. Verfahren nach einem der vorigen Ansprüche, wobei die linearisierte Winkelposition (Wₗ) durch einen diskreten Wert beschrieben wird, wobei eine Auflösung der abgestuften Winkelposition (Wₐ) zumindest eine Größenordnung und bevorzugt zumindest zwei Größenordnungen grober als eine Auflösung der linearisierten Winkelposition (Wₗ) ist.

6. Verfahren nach einem der vorigen Ansprüche, wobei enthaltend: Ermitteln (S14) zumindest eines Parameters des Schleifenfilters (119) in Abhängigkeit einer Winkelgeschwindigkeit (Wₒ) des Rotors (104).

7. Verfahren nach einem der vorigen Ansprüche, enthaltend: Empfangen (S12) jeweils eines Sensorsignals (115) von mehreren Sensoren (H1, H2, H3) der Sensorschaltung (113) und Erzeugen (S13) der abgestuften Winkelposition (Wₐ) entsprechend den mehreren Sensorsignalen (115).

8. Verfahren nach einem der vorigen Ansprüche, wobei die zumindest eine beaufschlagte Wicklung (W1, W2, W3) eine Statorwicklung ist.

9. Computerprogrammprodukt, welches Befehle umfasst, die bei der Ausführung des Programms durch einen Computer, nämlich insbesondere ein Steuergerät (111) für eine mobile Werkzeugmaschine (100), diesen veranlassen, das Verfahren (M10) zum Betreiben der mobilen Werkzeugmaschine (100) nach einem der vorigen Ansprüche auszuführen

10. Steuergerät (111) für eine mobile Werkzeugmaschine (100), enthaltend eine Schaltung, die zum Ausführen des Verfahrens (M10) zum Betreiben der mobilen Werkzeugmaschine (100) nach einem der Ansprüche 1 bis 8 eingerichtet ist.

11. Steuergerät nach Anspruch 10, wobei die Schaltung einen digitalen Regler, insbesondere einen Prozessor, enthält.

12. Steuergerät nach einem der Ansprüche 10 bis 11, enthaltend die Sensorschaltung (113) zum abgestuften Erfassen der Winkelposition, welche einen Teil der Schaltung bildet.

13. Mobile Werkzeugmaschine (100), enthaltend
einen Elektromotor (102), der einen Stator (103) und einen Rotor (104) zum Antreiben eines Werkzeugs (108) hat,
eine Sensorschaltung (113), welche zum abgestuften Erfassen einer Winkelposition (Wₐ) des Rotors (104) konfiguriert ist, und
ein Steuergerät (111) nach einem der Ansprüche 10 bis 12.

14. Mobile Werkzeugmaschine nach Anspruch 13, wobei die Sensorschaltung (113) Teil des Steuergeräts (111) ist, und das Steuergerät (111) benachbart zu dem Rotor (104) angeordnet ist.

15. Mobile Werkzeugmaschine nach einem der Ansprüche 13 bis 14, wobei der Elektromotor (102) ein bürstenloser Gleichstrommotor ist, und/oder wobei das Steuergerät (111) zum Beaufschlagen einer Wicklung (W1, W2, W3) des Stators (103) mit elektrischem Strom (lw) eingerichtet und/oder verschaltet ist.
